# EUROPEAN PATENT APPLICATION

(11) **EP 4 782 808 A1**
(43) Date of publication of application: **29.07.2026**
(21) Application number: 25220325.2
(22) Date of filing: 03.12.2025
(51) Int. Cl.: G01M 17/007

(54) **INSPECTION SYSTEM AND INSPECTION METHOD**

(30) Priority: 24.01.2025 JP 2025010433
(71) Applicant: Toyota Jidosha Kabushiki Kaisha, Toyota-shi, Aichi-ken 471-8571 (JP)
(72) Inventor: KOYAMA, Keisuke, Toyota-shi, 471-8571 (JP)
(74) Representative: TBK

(57) **Abstract**

An inspection system includes an inspection unit and a determination unit. The inspection unit executes predetermined preliminary control processing using a moving object and inspection equipment before a start of inspection processing in which the moving object is inspected by using the inspection equipment. The determination unit executes determination processing of determining whether a state of the moving object and the inspection equipment in the preliminary control processing satisfies a predetermined coordination condition.

## Description

### BACKGROUND

### FIELD

The present disclosure relates to an inspection system and an inspection method.

### RELATED ART

Japanese Translation of PCT International Application Publication No. JP-T-2017-538619 discloses a technology of causing a vehicle to run autonomously or by remote control in a production step of the vehicle.

A moving object, such as a vehicle, may undergo inspection using inspection equipment. A technology to further improve reliability of such inspection has been desired.

### SUMMARY

The present disclosure is achievable as the following aspects.
(1) According to one aspect of the present disclosure, an inspection system is provided. The inspection system includes an inspection unit and a determination unit. The inspection unit executes predetermined preliminary control processing using a moving object and inspection equipment before a start of inspection processing in which the moving object is inspected by using the inspection equipment. The determination unit executes determination processing of determining whether a state of the moving object and the inspection equipment in the preliminary control processing satisfies a predetermined coordination condition.
   According to this aspect, the preliminary control processing before the inspection processing is utilized to determine whether the state of the moving object and the inspection equipment satisfies the coordination condition. Therefore, the inspection processing can have further improved inspection reliability.
(2) In the above-described aspect, the inspection unit may start the inspection processing when the state satisfies the coordination condition. According to this aspect, the inspection processing can be started upon confirmation of satisfaction of the coordination condition, and the inspection processing can have further improved inspection reliability.
(3) In the above-described aspect, the inspection unit may not start the inspection processing but give abnormality notification when the state does not satisfy the coordination condition. According to this aspect, it can be suppressed that the inspection processing is started under a situation under which inspection reliability is highly unlikely to be secured, and abnormality notification can be given in such a situation.
(4) In the above-described aspect, the inspection unit may determine that an inspection result of the inspection processing is abnormal when the state does not satisfy the coordination condition. According to this aspect, the inspection processing is executed regardless of whether the coordination condition is satisfied, and when the coordination condition is not satisfied, the inspection result of the inspection processing can be determined to be abnormal. As a result, the inspection processing can have further improved inspection reliability.
(5) In the above-described aspect, the moving object may be a vehicle being capable of running by unmanned driving control. The inspection equipment may be a roller device including a roller rotatable while the roller supports a wheel of the vehicle. Before the inspection unit starts first inspection processing of drivingly rotating the wheel on the roller to rotate the roller and thus inspecting the vehicle, the inspection unit may execute, as the preliminary control processing related to the first inspection processing, first preliminary control processing of drivingly rotating the wheel on the roller by the unmanned driving control to rotate the roller. The determination unit may execute, as the determination processing, first determination processing of determining whether the state in the first preliminary control processing satisfies a first coordination condition that is the coordination condition related to the first preliminary control processing. The first coordination condition may include at least one of a circumferential speed condition and a torque condition. The circumferential speed condition may be related to a relation between circumferential speed of the wheel andcircumferential speed of the roller in the first preliminary control processing. The torque condition may be related to a relation between rotational torque of the wheel and rotational torque of the roller in the first preliminary control processing. According to this aspect, in the first preliminary control processing, it can be confirmed that the roller appropriately rotates in such a manner as to follow driving rotation of the wheel. Therefore, the first inspection processing can have further improved inspection reliability.
(6) In the above-described aspect, the first preliminary control processing may include acceleration processing of monotonically increasing the circumferential speed of the wheel on the roller by the unmanned driving control. The circumferential speed condition may include a condition related to a relation between the circumferential speed of the wheel and the circumferential speed of the roller in the acceleration processing. The torque condition may include a condition related to a relation between the rotational torque of the wheel and the rotational torque of the roller in the acceleration processing. According to this aspect, in the first preliminary control processing, following capability of rotation of the roller with respect to driving rotation of the wheel can be confirmed from a perspective of whether the rotation of the roller appropriately follows the rotation of the wheel at monotonically increasing circumferential speed.
(7) In the above-described aspect, an increase rate of the circumferential speed of the wheel in the acceleration processing may be equal to or less than an increase rate of the circumferential speed of the wheel in the first inspection processing. According to this aspect, in the acceleration processing, a sudden increase in the circumferential speed of the wheel can be suppressed.
(8) In the above-described aspect, maximum circumferential speed of the wheel in the first preliminary control processing may be equal to or less than maximum circumferential speed of the wheel in the first inspection processing. According to this aspect, in the first preliminary control processing, an unnecessary increase in the circumferential speed of the wheel can be suppressed.
(9) In the aspect described above, the first preliminary control processing may include steady control processing of rotating the wheel on the roller at constant circumferential speed by the unmanned driving control. The circumferential speed condition may include a condition related to a relation between the circumferential speed of the wheel and the circumferential speed of the roller in the steady control processing. The torque condition may include a condition related to a relation between the rotational torque of the wheel and the rotational torque of the roller in the steady control processing. According to this aspect, in the first preliminary control processing, following capability of rotation of the roller with respect to driving rotation of the wheel can be confirmed from a perspective of whether the rotation of the roller appropriately follows the rotation of the wheel rotating at the constant circumferential speed.
(10) In the above-described aspect, the inspection unit may execute steering of the vehicle by the unmanned driving control in the steady control processing. The determination unit may determine whether a steering amount in the steering corresponds to a moving amount of the vehicle on the roller by the steering. According to this aspect, the preliminary control processing can be utilized to confirm whether the vehicle on the roller appropriately moves in accordance with the steering amount.
(11) In the above-described aspect, the determination unit may use an external sensor to determine whether the steering amount corresponds to the moving amount. The external sensor may be disposed outside of the vehicle and used for running by the unmanned driving control. According to this aspect, in the preliminary control processing, the external sensor used for running by the unmanned driving control can be utilized to confirm whether the vehicle on the roller appropriately moves in accordance with the steering amount.
(12) In the above-described aspect, the inspection equipment may be a roller device including a roller rotatable while the roller supports a wheel of a vehicle as the moving object. Before the inspection unit starts second inspection processing that is the inspection processing to drivingly rotate the roller to rotate the wheel on the roller and thus inspect the vehicle, the inspection unit may execute, as the preliminary control processing related to the second inspection processing, second preliminary control processing of drivingly rotating the roller to rotate the wheel on the roller. The determination unit may execute, as the determination processing, second determination processing of determining whether the state in the second preliminary control processing satisfies a second coordination condition that is the coordination condition related to the second preliminary control processing. The second coordination condition may be a condition related to a relation between braking force caused at the wheel in the second preliminary control processing and rotational torque of the roller in the second preliminary control processing. According to this aspect, in the second preliminary control processing, it can be confirmed that the wheel appropriately rotates in such a manner as to follow driving rotation of the roller. Therefore, the second inspection processing can have further improved inspection reliability.

The present disclosure can be implemented in aspects other than the inspection system described above. For example, the present disclosure can be implemented in aspects, such as an inspection method, a control device, a moving object, a program to implement an inspection method, and a program product including a program. The program product may be provided as, for example, a non-transitory recording medium recording a program, or intangible software distributable over a network.

### BRIEF DESCRIPTION OF THE DRAWINGS

Fig. 1 is a conceptual diagram illustrating a configuration of an inspection system according to a first embodiment;
Fig. 2 is an explanatory diagram illustrating inspection equipment according to the first embodiment;
Fig. 3 is a block diagram illustrating a configuration of the inspection system according to the first embodiment;
Fig. 4 is a diagram for explaining first preliminary control processing and first inspection processing according to the first embodiment;
Fig. 5 is a diagram for explaining left-right moving processing according to the first embodiment;
Fig. 6 is a diagram for explaining first determination processing;
Fig. 7 is a diagram for explaining second determination processing;
Fig. 8 is a flowchart illustrating a procedure of running control of a vehicle according to the first embodiment;
Fig. 9 is a flowchart illustrating a procedure of first inspection control processing;
Fig. 10 is a flowchart illustrating a procedure of second inspection control processing;
Fig. 11 is a flowchart illustrating a procedure of inspection control processing according to a second embodiment;
Fig. 12 is an explanatory diagram illustrating a schematic configuration of a system according to a third embodiment; and
Fig. 13 is a flowchart illustrating a procedure of running control of a vehicle according to the third embodiment.

### DETAILED DESCRIPTION

### A. First Embodiment

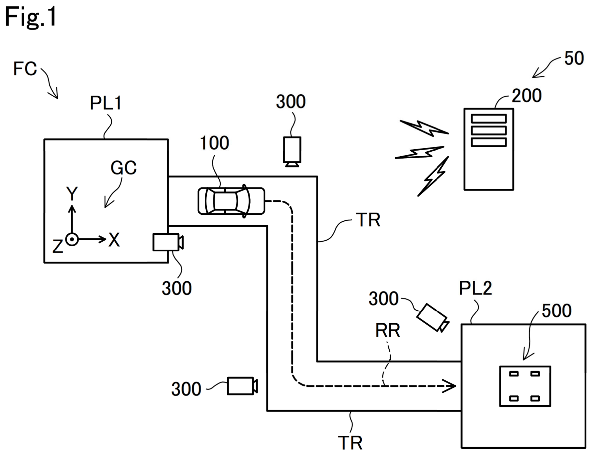

Fig. 1 is a conceptual diagram illustrating a configuration of an inspection system 50 according to a first embodiment. The inspection system 50 includes one or more vehicles 100 as a moving object, a server 200, one or more external sensors 300, and inspection equipment 500.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

Note that control to implement unmanned driving, such as remote control and autonomous control, is also referred to as unmanned driving control. Further, control to implement manned driving is also referred to as manned driving control.

In the present embodiment, the inspection system 50 is used in a factory FC where the vehicle 100 is produced. In the present embodiment, the reference coordinate system of the factory FC is a global coordinate system GC and a location in the factory can be expressed by X, Y, and Z coordinates in the global coordinate system GC. The factory FC includes a first place PL1 and a second place PL2. The first place PL1 and the second place PL2 are connected to one another through a track TR on which the vehicle 100 is able to run. The vehicle 100 moves from the first place PL1 to the second place PL2 through the track TR by the unmanned driving. In the present embodiment, the inspection equipment 500 is disposed at the second place PL2.

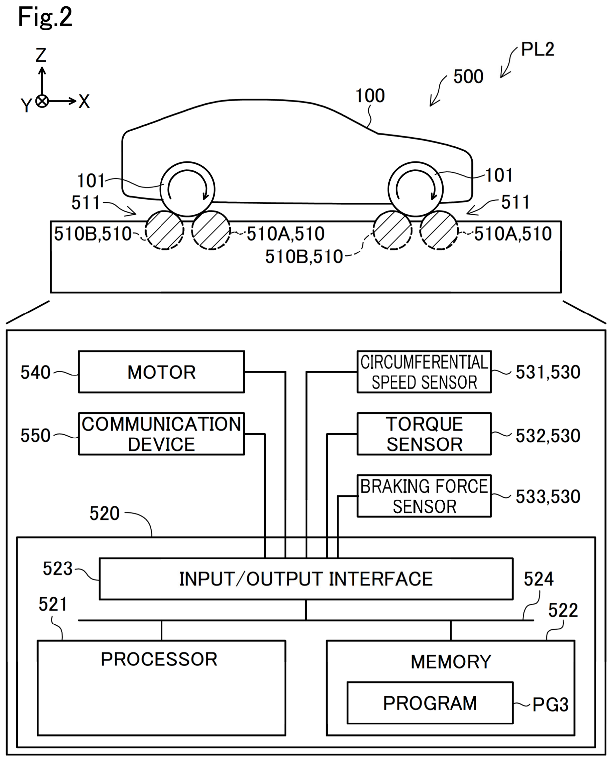

Fig. 2 is an explanatory diagram illustrating the inspection equipment 500 according to the present embodiment. The inspection equipment 500 is used for inspection of the vehicle 100. In the present embodiment, the inspection equipment 500 is configured as a roller device including a rotatable roller 510. As illustrated in Fig. 2, the inspection equipment 500 as the roller device includes the roller 510, an equipment control device 520, an equipment sensor 530, and a plurality of motors 540.

The roller 510 is installed, for example, to a road surface in the factory FC or to a stand on which the vehicle 100 is placed, in such a manner that the vehicle 100 can run onto the roller 510. The roller 510 is rotatable while supporting a wheel 101 of the vehicle 100. In the present embodiment, the inspection equipment 500 includes a roller unit 511 per wheel 101. In the present embodiment, the roller unit 511 includes two rollers 510: a front roller 510A and a rear roller 510B. The front roller 510A is disposed on a +X side of the rear roller 510B. That is, the inspection equipment 500 has a configuration in which two rollers 510 support each wheel 101 and includes eight rollers 510 in total. In Fig. 2, the rollers 510 are hatched. In another embodiment, one roller unit 511 that can support left and right wheels 101 together may be provided to each of a pair of front wheels and a pair of rear wheels. Further, for example, the roller unit 511 may have a configuration in which one roller 510 supports one front wheel and two rollers 510 support one rear wheel, or a configuration in which two rollers 510 support one front wheel and two rollers 510 support one rear wheel.

The plurality of motors 540 includes a motor 540 that rotates the front roller 510A and a motor 540 that rotates the rear roller 510B.

The equipment sensor 530 includes a circumferential speed sensor 531, a torque sensor 532, and a braking force sensor 533. The circumferential speed sensor 531 is a sensor to detect circumferential speed of the roller 510. For example, the circumferential speed sensor 531 is a rotation speed sensor that detects rotation speed of the roller 510. The torque sensor 532 is a sensor to detect rotational torque of the roller 510. For example, as the torque sensor 532, an ammeter to detect a current value input to the motor 540 may be used. The braking force sensor 533 is a sensor to detect braking force of the vehicle 100, which is applied to the roller 510.

The equipment control device 520 controls each unit of the inspection equipment 500. The equipment control device 520 includes a computer including a processor 521, a memory 522, an input/output interface 523, and an internal bus 524. The motor 540, a communication device 550, and the equipment sensor 530 are coupled to the input/output interface 523. The processor 521, the memory 522, and the input/output interface 523 are coupled to one another via the internal bus 524 in a bidirectionally communicable manner. The equipment control device 520 includes the communication device 550 and can communicate with another device, such as the server 200, by wired or wireless communication. The processor 521 executes a program PG3 stored in the memory 522, thus implementing various functions.

The inspection equipment 500 includes at least one of a first function and a second function. The first function is a function of drivingly rotating the wheel 101 on the roller 510 to rotate the roller 510 and thus inspecting the vehicle 100. That is, in the first function, the roller 510 is driven to rotate in such a manner as to follow driving rotation of the vehicle 100. In the case in which the roller 510 is rotated by the first function, a detection result of the circumferential speed sensor 531 can be used to detect circumferential speed of the wheel 101, that is, vehicle speed of the vehicle 100 and acceleration of the vehicle 100. The second function is a function of drivingly rotating the roller 510 to rotate the wheel 101 on the roller 510 and thus inspecting the vehicle 100. That is, in the second function, the wheel 101 is driven to rotate in such a manner as to follow driving rotation of the roller 510. For example, the first function is used for inspection of a driving device of the vehicle 100. The roller device having the first function is also referred to as a "drum tester". For example, the second function is used for inspection of a braking device of the vehicle 100. The roller device having the second function is also referred to as a "brake tester". In the present embodiment, the inspection equipment 500 includes both of the first function and the second function.

Note that the configuration of the inspection equipment 500 is not limited to that described above as long as the inspection equipment 500 is configured in accordance with a function and application of the inspection equipment 500. For example, in a case in which the inspection equipment 500 does not have the second function, the inspection equipment 500 may not include the motor 540 and the braking force sensor 533. For example, in the inspection using the inspection equipment 500 or preliminary control processing described later, in a case in which rotational torque of the roller 510 is not used, the inspection equipment 500 may not include the torque sensor 532.

As illustrated in Fig. 1, in the factory FC, a plurality of external sensors 300 is disposed along the track TR. A position of each external sensor 300 in the factory FC is adjusted in advance. The external sensor 300 is a sensor positioned outside of the vehicle 100. In the present embodiment, the external sensor 300 includes a camera. The camera as the external sensor 300 images the vehicle 100 and outputs a captured image as a detection result. The external sensor 300 includes a communication device (not illustrated) and can communicate with another device, such as the server 200, by wired or wireless communication.

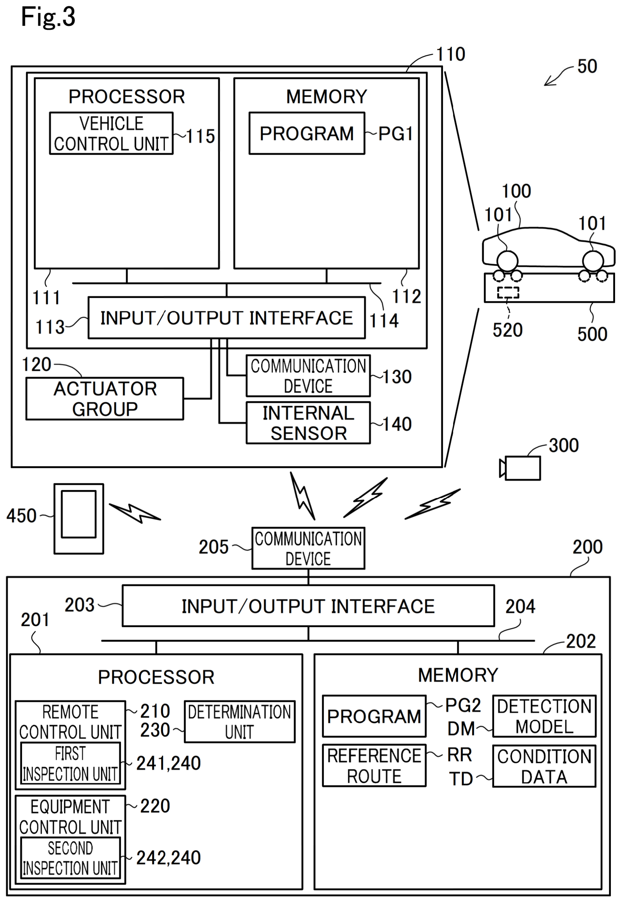

Fig. 3 is a block diagram illustrating a configuration of the inspection system 50. The vehicle 100 includes a vehicle control device 110 that controls each unit of the vehicle 100, an actuator group 120 including one or more actuators that perform driving under control of the vehicle control device 110, a communication device 130 to communicate with an external device such as the server 200 by wireless communication, and one or more internal sensors 140. The actuator group 120 includes an actuator of a driving device for accelerating the vehicle 100, an actuator of a steering device for changing a traveling direction of the vehicle 100, and an actuator of a braking device for decelerating the vehicle 100.

The internal sensor 140 is a sensor installed in the vehicle 100. The internal sensor 140 includes a vehicle speed sensor to detect vehicle speed of the vehicle 100, an acceleration sensor to detect acceleration of the vehicle 100, a torque sensor to detect rotational torque of the wheel 101, and the like. The internal sensor 140 may include, other than the vehicle speed sensor, the acceleration sensor, and the torque sensor, for example, various types of sensors, such as a camera, a LiDAR, a millimeter-wave radar, an ultrasonic sensor, a GNSS sensor, a wheel speed sensor, a gyro sensor, a shift position sensor, and various types of encoders that detect operation of each unit of the vehicle 100. Note that the wheel speed sensor may be used as the vehicle speed sensor. For example, as the rotational torque of the vehicle 100, torque of a driving motor for rotating a driving wheel provided to the vehicle 100 may be detected. Further, as the torque sensor, for example, an ammeter to detect a current value input to the driving motor may be used.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120, the communication device 130, and the internal sensor 140 are coupled to the input/output interface 113. The processor 111 executes a program PG1 stored in the memory 112, thus implementing various functions including a function as a vehicle control unit 115.

The vehicle control unit 115 controls the actuator group 120 to cause the vehicle 100 to run. The vehicle control unit 115 can use a running control signal received from the server 200 to control the actuator group 120, thereby causing the vehicle 100 to run. The running control signal is a control signal to cause the vehicle 100 to run. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100.

The server 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 to communicate with various devices located outside of the server 200 is coupled to the input/output interface 203. The communication device 205 can communicate with the vehicle 100 and a terminal device 450 described later by wireless communication, and can communicate with each external sensor 300 and the inspection equipment 500 by wired or wireless communication. The memory 202 stores various types of information including a program PG2, a detection model DM, a reference route RR, and condition data TD. The processor 201 executes the program PG2 stored in the memory 202, thus implementing various functions including functions as a remote control unit 210, an equipment control unit 220, and a determination unit 230.

The remote control unit 210 generates the running control signal to control the actuator group 120 of the vehicle 100 and transmits the running control signal to the vehicle 100, thus causing the vehicle 100 to run by remote control.

In the present embodiment, the remote control unit 210 functions as an inspection unit 240. The inspection unit 240 executes inspection processing and the preliminary control processing. The inspection processing is processing of inspecting the vehicle 100 by using the inspection equipment 500. In the inspection processing, for example, the inspection unit 240 may transmit to the inspection equipment 500 a signal to start acquisition of the detection result of the equipment sensor 530, and a signal to end the acquisition of the detection result of the equipment sensor 530, in accordance with operation of the vehicle 100 at the inspection equipment 500. The preliminary control processing is executed before a start of the inspection processing. The preliminary control processing is predetermined processing where the vehicle 100 and the inspection equipment 500 are used. The preliminary control processing is executed to cause the vehicle 100 and the inspection equipment 500 to execute given operation prior to the inspection processing and thereby confirm coordination of the vehicle 100 and the inspection equipment 500.

More specifically, in the present embodiment, the remote control unit 210 functions as a first inspection unit 241. The first inspection unit 241 executes first inspection processing as the inspection processing and first preliminary control processing as the preliminary control processing related to the first inspection processing. The first inspection processing is processing to execute inspection utilizing the first function. That is, in the first inspection processing, the first inspection unit 241 drivingly rotates the wheel 101 on the roller 510 to rotate the roller 510, and thereby inspects the vehicle 100. The first preliminary control processing is executed before a start of the first inspection processing. The first preliminary control processing is processing of drivingly rotating the wheel 101 on the roller 510 by the unmanned driving control to rotate the roller 510. That is, in the first preliminary control processing, similarly to the first inspection processing, the roller 510 is driven to rotate in such a manner as to follow driving rotation of the wheel 101.

In the first inspection processing and the first preliminary control processing, the remote control unit 210 functioning as the first inspection unit 241 generates the running control signal and transmits the generated running control signal to the vehicle 100 on the roller 510 while the vehicle 100 is supported by the roller 510. As a result, the wheel 101 supported by the roller 510 rotates drivingly and the roller 510 is driven to rotate in such a manner as to follow the driving rotation of the wheel 101.

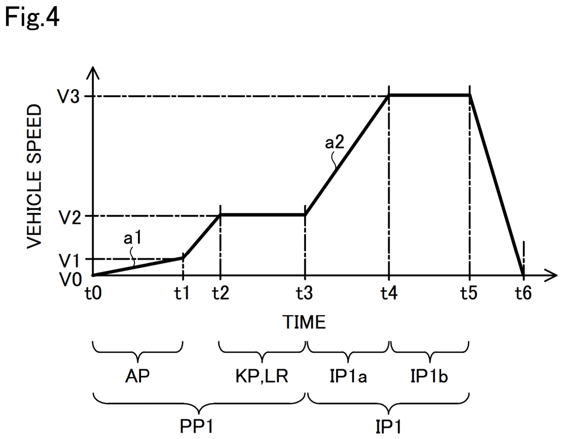

Fig. 4 is a diagram for explaining first preliminary control processing PP1 and first inspection processing IP1 according to the present embodiment. Fig. 4 illustrates a graph in which a horizontal axis indicates time and a vertical axis indicates vehicle speed. It can be said that Fig. 4 illustrates an example of time series change in vehicle speed in a case in which the first preliminary control processing PP1 and the first inspection processing IP1 are not stopped in the middle thereof.

As illustrated in Fig. 4, in the present embodiment, the first preliminary control processing PP1 includes acceleration processing AP and steady control processing KP. The acceleration processing AP is processing of monotonically increasing circumferential speed of the wheel 101, that is, vehicle speed of the vehicle 100 on the roller 510 by the unmanned driving control. The steady control processing KP is processing of rotating the wheel 101 on the roller 510 at constant circumferential speed.

As illustrated in Fig. 4, in the acceleration processing AP, the first inspection unit 241 increases the circumferential speed of the wheel 101 at a constant increase rate by the unmanned driving control. That is, in the acceleration processing AP, the first inspection unit 241 increases the vehicle speed of the vehicle 100 at constant acceleration a1. In the example of Fig. 4, the acceleration processing AP is executed in a period from time t0 to time t1. In the example of Fig. 4, the vehicle speed at the time t0 is vehicle speed V0, and the vehicle speed at the time t1 is vehicle speed V1. In the present embodiment, the vehicle speed V0 is zero. The vehicle speed V1 corresponds to target vehicle speed of the vehicle 100 in the acceleration processing AP.

Note that in the present embodiment the increase rate of the circumferential speed of the wheel 101 in the acceleration processing AP is equal to or less than an increase rate of the circumferential speed in the first inspection processing IP1 described later. More specifically, in the present embodiment, the acceleration a1 is equal to or less than acceleration a2 in acceleration inspection IP1a included in the first inspection processing IP1. Note that in a case in which acceleration in the acceleration processing AP and acceleration in the first inspection processing IP1 are not constant, a maximum value of the acceleration in the acceleration processing AP and a maximum value of the acceleration in the first inspection processing IP1 may be compared to one another.

As illustrated in Fig. 4, in the steady control processing KP, the first inspection unit 241 maintains the vehicle speed of the vehicle 100 at vehicle speed V2 by the unmanned driving control. In the example of Fig. 4, after completion of the acceleration processing AP, the vehicle speed of the vehicle 100 is increased from the vehicle speed V1 to the vehicle speed V2 in a period from the time t1 to time t2, and then the steady control processing KP is executed in a period from the time t2 to time t3 to maintain the vehicle speed at the vehicle speed V2. The vehicle speed maintained in the steady control processing KP such as the vehicle speed V2 is also referred to as "steady vehicle speed". In the present embodiment, the vehicle speed V2 corresponds to maximum circumferential speed of the wheel 101 in the steady control processing KP, that is, maximum vehicle speed in the steady control processing KP. The vehicle speed V2 is equal to or less than maximum circumferential speed of the wheel 101 in the first inspection processing IP1 described later, that is, vehicle speed V3, which is maximum vehicle speed of the vehicle 100 in the first inspection processing IP1.

In the present embodiment, the first inspection unit 241 executes left-right moving processing LR in the steady control processing KP. The left-right moving processing LR is processing of executing steering of the vehicle 100 by the unmanned driving control to move the vehicle 100 in a left-right direction on the roller 510. Note that the left-right direction as used herein corresponds to a width direction of the roller 510 and is a direction orthogonal to a rotation direction of the roller 510 and to the vertical direction. In the present embodiment, the left-right direction corresponds to a vehicle width direction of the vehicle 100 facing forward on the roller 510. As a result, in the present embodiment, the right direction is a -Y direction and the left direction is a +Y direction.

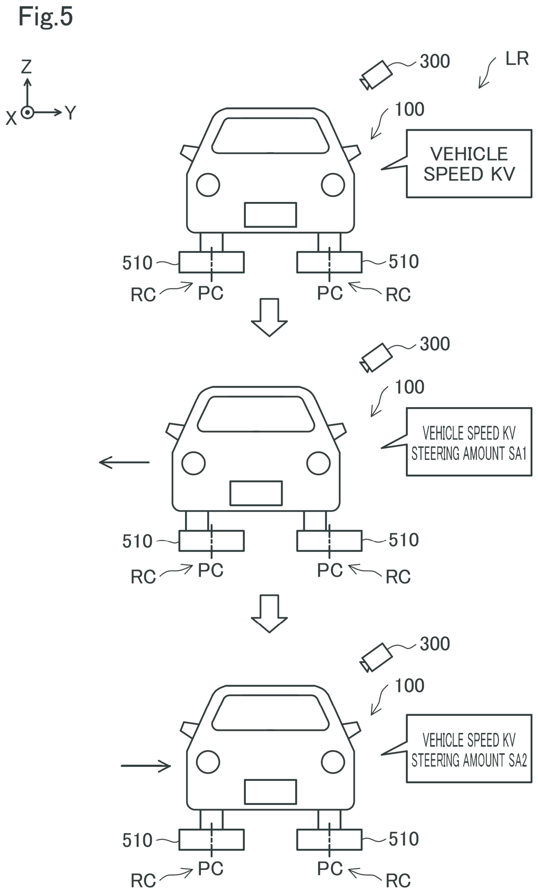

Fig. 5 is a diagram for explaining the left-right moving processing LR according to the present embodiment. As illustrated in Fig. 5, in the left-right moving processing LR, while the vehicle speed of the vehicle 100 is maintained at steady vehicle speed KV through the steady control processing KP, the first inspection unit 241 moves the vehicle 100 in one of the left and right directions by a predetermined first steering amount SA1, and then moves the vehicle 100 in the other one of the left and right directions by a predetermined second steering amount SA2 by the unmanned driving control. Accordingly, each wheel 101 is positioned within a central range RC including a center position PC of the roller 510 in the left-right direction. In the present embodiment, in the inspection processing, the vehicle 100 on the roller 510 is steered to be positioned within the central range RC by the unmanned driving control. Such positional control of the vehicle 100 in the left-right direction in the inspection processing is executed by using the external sensor 300 that can capture the vehicle 100 on the roller 510 among the plurality of external sensors 300 installed in the factory FC. Note that in the example of Fig. 5 the vehicle 100 is first moved in the right direction and then moved in the left direction. The moving of the vehicle 100 in the left and right directions in the left-right moving processing LR may be repeated twice or more.

As illustrated in Fig. 4, in the present embodiment, the first inspection processing IP1 includes the acceleration inspection IP1a and steady control inspection IP1b. The acceleration inspection IP1a is processing of monotonically increasing the vehicle speed of the wheel 101 on the roller 510 and thus inspecting the vehicle 100. For example, the acceleration inspection IP1a is used for inspection of acceleration characteristics of the vehicle 100. The acceleration characteristics indicate behavior of the vehicle 100 in acceleration when the driving device is controlled to accelerate the vehicle 100, and affects acceleration feeling of the vehicle 100. As illustrated in Fig. 4, in the acceleration inspection IP1a, the first inspection unit 241 accelerates the vehicle speed of the vehicle 100 at the constant acceleration a2 by the unmanned driving control. In the present embodiment, the acceleration a2 is greater than the acceleration a1. In the example of Fig. 4, the acceleration inspection IP1a is executed in a period from the time t3 to time t4. In the example of Fig. 4, the vehicle speed at the time t3 is the vehicle speed V2, and the vehicle speed at the time t4 is vehicle speed V3.

The steady control inspection IP1b is processing of keeping the vehicle speed of the wheel 101 constant on the roller 510 thus inspecting the vehicle 100. For example, the steady control inspection IP1b is used for inspection of a vehicle speed instruction value of the vehicle 100. For example, the vehicle speed instruction value is used for displaying the vehicle speed on a speedometer of the vehicle 100 or vehicle speed control of the vehicle 100. As illustrated in Fig. 4, in the steady control inspection IP1b, the first inspection unit 241 maintains the vehicle speed of the vehicle 100 at the vehicle speed V3 by the unmanned driving control. In the example of Fig. 4, after completion of the acceleration inspection IP1a , the vehicle speed is maintained at the vehicle speed V3 in a period from the time t4 to time t5. In the example of Fig. 4, after completion of the steady control inspection IP1b, the first inspection unit 241 decreases the vehicle speed of the vehicle 100 to the vehicle speed V0 to stop the vehicle 100 from the time t5 to time t6.

The equipment control unit 220 illustrated in Fig. 3 generates an equipment control signal and transmits the equipment control signal to the inspection equipment 500, and thereby remotely controls the inspection equipment 500. The equipment control signal is a control signal to control operation of the inspection equipment 500.

In the present embodiment, the equipment control unit 220 functions as the inspection unit 240. More specifically, the equipment control unit 220 functions as a second inspection unit 242. The second inspection unit 242 executes second inspection processing as the inspection processing and second preliminary control processing as the preliminary control processing related to the second inspection processing. The second inspection processing is processing to execute inspection utilizing the second function. That is, in the second inspection processing, the second inspection unit 242 drivingly rotates the roller 510 to rotate the wheel 101 on the roller 510, and thereby inspects the vehicle 100. The second preliminary control processing is executed before the start of the second inspection processing. The second preliminary control processing is processing of drivingly rotating the roller 510 to rotate the wheel 101 on the roller 510. That is, in the second preliminary control processing, similarly to the second inspection processing, the wheel 101 is driven to rotate in such a manner as to follow driving rotation of the roller 510.

In the present embodiment, in the second inspection processing and the second preliminary control processing, the equipment control unit 220 functioning as the second inspection unit 242 generates the equipment control signal to drivingly rotate the roller 510 and transmits the generated equipment control signal to the roller device as the inspection equipment 500 while the vehicle 100 is supported by the roller 510. As a result, the roller 510 rotates drivingly and the wheel 101 on the roller 510 is driven to rotate in such a manner as to follow the driving rotation of the roller 510.

The determination unit 230 executes determination processing. The determination processing is processing of determining whether a state of the vehicle 100 and the inspection equipment 500 in the preliminary control processing satisfies a predetermined coordination condition. The coordination condition is a condition related to coordination of the vehicle 100 and the inspection equipment 500. The "state of the vehicle 100 and the inspection equipment 500 in the preliminary control processing" is also referred to as a preliminary state. The coordination condition corresponds to a condition that should be satisfied by the preliminary state in the preliminary control processing.

In the present embodiment, the determination unit 230 executes first determination processing and second determination processing as the determination processing.

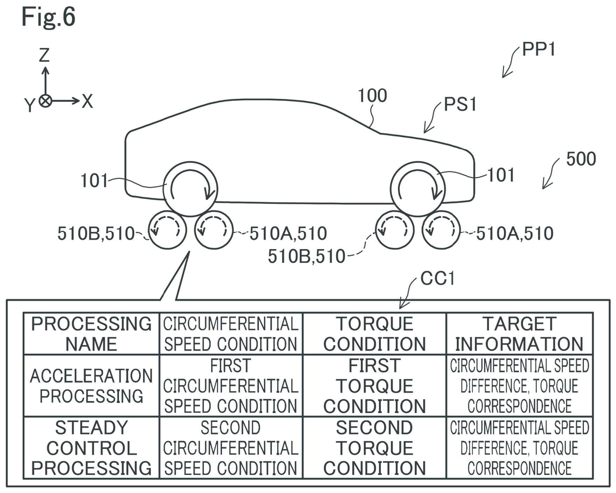

Fig. 6 is a diagram for explaining the first determination processing. In Fig. 6, driving rotation of the wheel 101 in the first preliminary control processing PP1 is indicated by solid arrows, and rotation of the roller 510 following the driving rotation of the wheel 101 is indicated by broken arrows. The first determination processing is processing of determining whether a first preliminary state PS1 satisfies a first coordination condition CC1. The first preliminary state PS1 is a preliminary state in the first preliminary control processing PP1. The first coordination condition CC1 is a coordination condition related to the first preliminary control processing PP1. That is, the first coordination condition CC1 corresponds to a coordination condition that should be satisfied in the first preliminary control processing PP1. As a result, the first determination processing relates to the first preliminary control processing PP1 and to the first inspection processing IP1.

As illustrated in Fig. 6, the first coordination condition CC1 includes at least one of a circumferential speed condition and a torque condition. In the present embodiment, the first coordination condition CC1 includes both of the circumferential speed condition and the torque condition. The circumferential speed condition is a condition related to a relation between circumferential speed of the wheel 101 and circumferential speed of the roller 510 in the first preliminary control processing PP1. More specifically, the circumferential speed condition in the present embodiment is a condition related to a circumferential speed difference. The circumferential speed difference means a difference between the circumferential speed of the wheel 101 and the circumferential speed of the roller 510. The torque condition is a condition related to rotational torque of the wheel 101 and rotational torque of the roller 510 in the first preliminary control processing PP1. More specifically, the torque condition in the present embodiment is a condition related to torque correspondence. The torque correspondence means correspondence between the rotational torque of the wheel 101 and the rotational torque of the roller 510. As a result, in the present embodiment, the first determination processing uses the circumferential speed difference and the torque correspondence as target information subject to determination. For example, the target information is acquired by using the internal sensor 140, the equipment sensor 530, and/or the like.

Fig. 6 illustrates conditions used as the first coordination condition CC1 related to each of the acceleration processing AP and the steady control processing KP. As illustrated in Fig. 6, in the present embodiment, the circumferential speed condition includes a first circumferential speed condition related to the acceleration processing AP and a second circumferential speed condition related to the steady control processing KP. In the present embodiment, the torque condition includes a first torque condition related to the acceleration processing AP and a second torque condition related to the steady control processing KP.

The first circumferential speed condition is a condition related to a relation between circumferential speed of the wheel 101 and circumferential speed of the roller 510 in the acceleration processing AP. The first circumferential speed condition in the present embodiment is a condition indicating correspondence between the circumferential speed of the wheel 101 and the circumferential speed of the roller 510 in the acceleration processing AP. More specifically, the first circumferential speed condition is a condition that a difference between the circumferential speed of the wheel 101 and the circumferential speed of the roller 510 in the acceleration processing AP is equal to or less than a first difference determined in advance.

The second circumferential speed condition is a condition related to a relation between circumferential speed of the wheel 101 and circumferential speed of the roller 510 in the steady control processing KP. The second circumferential speed condition in the present embodiment is a condition indicating correspondence between the circumferential speed of the wheel 101 and the circumferential speed of the roller 510 in the steady control processing KP. More specifically, the second circumferential speed condition is a condition that the circumferential speed difference in the steady control processing KP is equal to or less than a second difference determined in advance. Each of the first difference and the second difference is preferably a small value that allows the roller 510 to rotate in such a manner as to appropriately follow driving rotation of the wheel 101 when the circumferential speed difference is the first difference or the second difference.

The first torque condition is a condition related to a relation between rotational torque of the wheel 101 and rotational torque of the roller 510 in the acceleration processing AP. The first torque condition in the present embodiment is a condition that correspondence between the rotational torque of the wheel 101 and the rotational torque of the roller 510 in the acceleration processing AP satisfies first correspondence determined in advance.

The second torque condition is a condition related to a relation between rotational torque of the wheel 101 and rotational torque of the roller 510 in the steady control processing KP. The second torque condition in the present embodiment is a condition that torque correspondence in the steady control processing KP satisfies second correspondence determined in advance. Each of the first torque correspondence and the second torque correspondence is preferably defined so that the roller 510 rotates in such a manner as to appropriately follow rotation of the wheel 101 when the torque correspondence satisfies the first correspondence or the second correspondence.

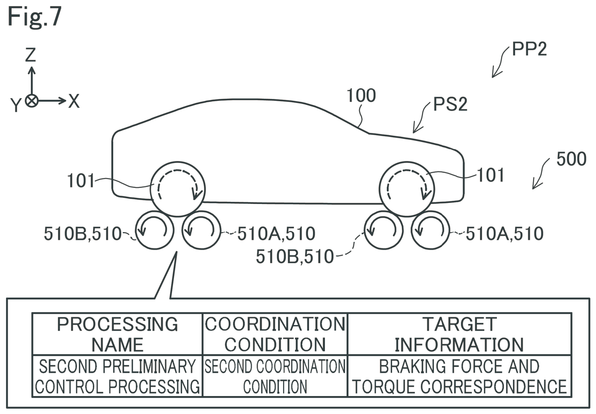

Fig. 7 is a diagram for explaining the second determination processing. In Fig. 7, driving rotation of the roller 510 in second preliminary control processing PP2 is indicated by solid arrows, and following rotation of the wheel 101 is indicated by broken arrows. The second determination processing is processing of determining whether a second preliminary state PS2 satisfies a second coordination condition. The second preliminary state PS2 is a preliminary state in the second preliminary control processing PP2. The second coordination condition is a coordination condition related to the second preliminary control processing PP2. That is, the second coordination condition corresponds to a coordination condition that should be satisfied in the second preliminary control processing PP2. As a result, the second determination processing relates to the second preliminary control processing PP2 and to the second inspection processing. The second coordination condition is a condition related to a "braking force and torque relationship". The "braking force and torque relationship" means a relation between braking force caused at the wheel 101 in the second preliminary control processing PP2 and rotational torque of the roller 510 in the second preliminary control processing PP2, and corresponds to target information in the second determination processing. More specifically, the second coordination condition is a condition that the braking force and torque relationship in the second preliminary control processing PP2 satisfies reference correspondence determined in advance. The reference correspondence is preferably defined so that the wheel 101 rotates in such a manner as to appropriately follow rotation of the roller 510 when the braking force and torque relationship satisfies the reference correspondence.

Note that in the present embodiment data indicating the first difference, the second difference, the first correspondence, the second correspondence, and the reference correspondence are included in the condition data TD illustrated in Fig. 3. The condition data TD is data related to the coordination condition. As a result, in each preliminary control processing and each inspection processing, the first inspection unit 241 and the second inspection unit 242 can refer to the condition data TD to read out and acquire various types of data such as data indicating the first difference.

In the present embodiment, the determination unit 230 illustrated in Fig. 3 executes, in addition to the determination processing, left-right determination processing. The left-right determination processing is processing of determining whether the steering amount in the steering in the left-right moving processing LR illustrated in Fig. 5 corresponds to a moving amount of the vehicle 100 on the roller 510 through the steering in the left-right moving processing LR. The moving amount of the vehicle 100 on the roller 510 through the steering in the left-right moving processing LR is also referred to as a "left-right moving amount". In the left-right determination processing in the present embodiment, the determination unit 230 uses the external sensor 300 that can capture the vehicle 100 on the roller 510 among the plurality of external sensors 300 installed in the factory FC to determine whether the steering amount corresponds to the left-right moving amount in the left-right moving processing LR. More specifically, the determination unit 230 uses the detection result of the external sensor 300 to acquire the left-right moving amount and compares the acquired left-right moving amount and the steering amount to one another to determine whether the left-right moving amount corresponds to the steering amount. In the left-right determination processing, for example, whether a steering amount (the first steering amount SA1 in Fig. 5) in steering to move the vehicle 100 in the right direction corresponds to a moving amount of the vehicle 100 in the right direction, and whether a steering amount (the second steering amount SA2 in Fig. 5) in steering to move the vehicle 100 in the left direction corresponds to a moving amount of the vehicle 100 in the left direction may be determined to determine whether the left-right moving amount and the steering amount correspond to one another. For example, whether the left-right moving amount and the steering amount correspond to one another may be determined based on positional deviation of the central range RC and each wheel 101 in the left-right direction.

Referring back to Fig. 3, in the present embodiment, the determination processing is executed before the start of the inspection processing related to the concerned determination processing. More specifically, the first determination processing is executed before the start of the first inspection processing IP1. Note that in the present embodiment the first determination processing and the left-right determination processing are executed before the start of the first inspection processing IP1. The second determination processing is executed before the start of the second inspection processing.

In the present embodiment, when the preliminary state in the preliminary control processing satisfies the coordination condition, the inspection unit 240 described above starts the inspection processing corresponding to the concerned preliminary control processing. More specifically, when the first preliminary state PS1 satisfies the first coordination condition CC1, the first inspection unit 241 starts the first inspection processing IP1. Note that, in the present embodiment, when the first preliminary state PS1 satisfies the first coordination condition CC1, and the steering amount and the left-right moving amount in the left-right moving processing LR correspond to one another, the first inspection unit 241 starts the first inspection processing IP1. When the second preliminary state PS2 satisfies the second coordination condition, the second inspection unit 242 starts the second inspection processing.

In the present embodiment, when the preliminary state in the preliminary control processing does not satisfy the coordination condition, the inspection unit 240 does not start the inspection processing corresponding to the concerned preliminary control processing but gives abnormality notification. More specifically, when the first preliminary state PS1 does not satisfy the first coordination condition CC1, the first inspection unit 241 does not start the first inspection processing IP1 but gives abnormality notification. Moreover, in the present embodiment, when the steering amount and the left-right moving amount do not correspond to one another in the left-right determination processing, the first inspection unit 241 does not start the first inspection processing IP1 but gives abnormality notification. In such abnormality notification, for example, the first inspection unit 241 may give notification of at least one of information indicating that the first preliminary state PS1 does not satisfy the first coordination condition CC1, information indicating that the steering amount and the left-right moving amount do not correspond to one another in the left-right determination processing, and information indicating that the first inspection processing IP1 is not started. When the second preliminary state PS2 does not satisfy the second coordination condition, the second inspection unit 242 does not start the second inspection processing but gives abnormality notification. In such abnormality notification, for example, the second inspection unit 242 may give notification of at least one of information indicating that the second preliminary state PS2 does not satisfy the second coordination condition, and information indicating that the second inspection processing is not started.

In the present embodiment, the inspection unit 240 uses the terminal device 450 as a notification device to notify a user of abnormality. Examples of the terminal device 450 include a tablet terminal and a smartphone owned by the user. The user as used herein means a user of the inspection system 50, the factory FC, and the like, and is, for example, an administrator or a worker of the factory FC. In another embodiment, as the notification device, for example, a display device that outputs visual information, a speaker that outputs audio information, a printer, or the like may be used.

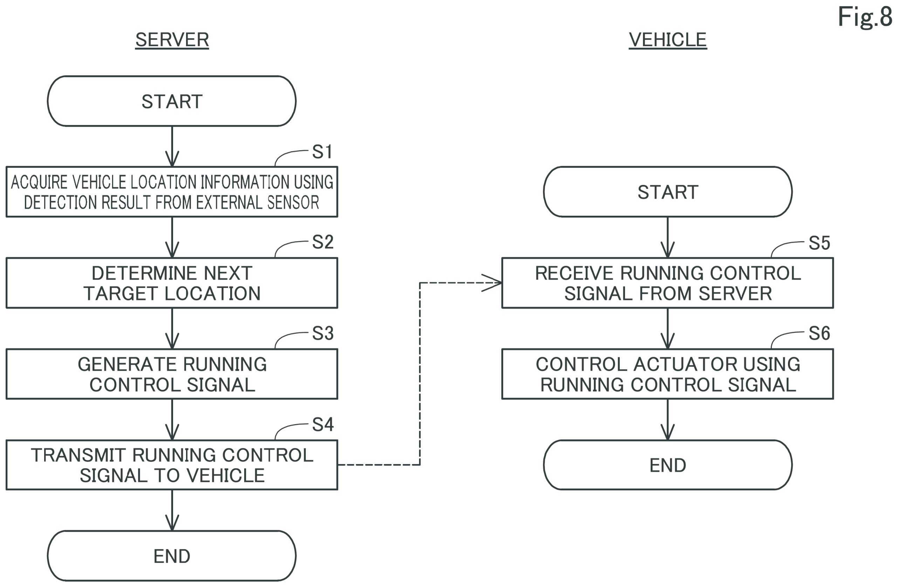

Fig. 8 is a flowchart illustrating a procedure of running control of the vehicle 100 according to the first embodiment. In the procedure in Fig. 8, the processor 201 of the server 200 executes the program PG2, thus functioning as the remote control unit 210. The processor 111 of the vehicle 100 executes the program PG1, thus functioning as the vehicle control unit 115.

In step S1, the processor 201 of the server 200 acquires vehicle location information using the detection result output from the external sensor 300. The vehicle location information is locational information as a basis for generating a running control signal. In the present embodiment, the vehicle location information includes the location and orientation of the vehicle 100 in the global coordinate system GC of the factory FC. Specifically, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 50 or outside the system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 50 in the present embodiment, it becomes possible to move the vehicle 100 without using a transport unit such as a crane or a conveyor.

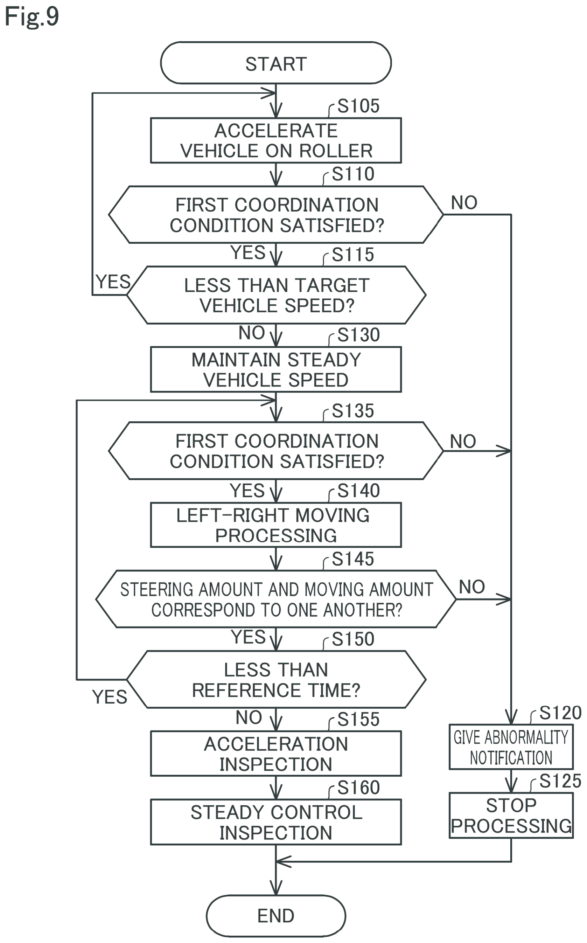

Fig. 9 is a flowchart illustrating a procedure of the first inspection control processing to implement an inspection method according to the present embodiment. The first inspection control processing includes the first preliminary control processing PP1, the first determination processing, and the first inspection processing IP1. For example, the first inspection control processing is executed by the processor 201 of the server 200 at a timing at which each wheel 101 of the vehicle 100 subject to inspection is positioned on the corresponding roller 510.

At Steps S105 to S115, the first inspection unit 241 first executes the acceleration processing AP. First, at Step S105, the first inspection unit 241 increases vehicle speed of the vehicle 100 on the roller 510 at the acceleration a1 by the unmanned driving control. Next, at Step S110, the determination unit 230 determines whether the first preliminary state PS1 at Step S105 satisfies the first circumferential speed condition and the first torque condition in the first coordination condition CC1. If the first preliminary state PS1 satisfies the first circumferential speed condition and the first torque condition at Step S110, at Step S115, the first inspection unit 241 determines whether the vehicle speed of the vehicle 100 is less than the target vehicle speed. If the vehicle speed at Step S115 is less than the target vehicle speed, the first inspection unit 241 returns the processing to Step S105. That is, Steps S105 to S115 in the present embodiment are repetitively executed until the vehicle speed is accelerated to the target vehicle speed, or the preliminary state fails to satisfy one or both of the first circumferential speed condition and the first torque condition.

If the preliminary state does not satisfy one or both of the first circumferential speed condition and the first torque condition at Step S110, at Step S120, the first inspection unit 241 gives abnormality notification by using the notification device. At Step S125, the first inspection unit 241 decreases the vehicle speed of the vehicle 100 to stop the vehicle 100, and thereby stops the first preliminary control processing PP1 in the middle thereof.

If the vehicle speed is equal to or more than target vehicle speed at Step S115, at Steps S130 to S140, the first inspection unit 241 executes the steady control processing KP. First, at Step S130, the first inspection unit 241 maintains the vehicle speed at the steady vehicle speed KV by the unmanned driving control. At Step S130 in the present embodiment, the first inspection unit 241 accelerates the vehicle speed of the vehicle 100 from the vehicle speed V1 to the vehicle speed V2, and then maintains the vehicle speed at the steady vehicle speed KV. At Step S135, the determination unit 230 determines whether the first preliminary state PS1 at Step S130 satisfies the second circumferential speed condition and the second torque condition in the first coordination condition CC1.

If the first preliminary state PS1 satisfies the second circumferential speed condition and the second torque condition at Step S135, at Step S140, the first inspection unit 241 executes the left-right moving processing LR. At Step S145, the determination unit 230 determines whether the steering amount corresponds to the left-right moving amount at Step S140.

If the steering amount corresponds to the left-right moving amount at Step S145, at Step S150, the first inspection unit 241 determines whether maintained time for which the vehicle speed of the vehicle 100 is maintained at the steady vehicle speed KV is less than reference time. In the present embodiment, a length of the reference time corresponds to a length of time from the time t2 to the time t3. If the maintained time is less than the reference time at Step S150, the first inspection unit 241 returns the processing to Step S135. That is, Steps S135 to S150 in the present embodiment are repetitively executed until the maintained time becomes equal to or more than the reference time, the first preliminary state PS1 fails to satisfy one or both of the second circumferential speed condition and the second torque condition at Step S135, or the steering amount and the left-right moving amount fail to correspond to one another at Step S145.

If the preliminary state does not satisfy one or both of the second circumferential speed condition and the second torque condition at Step S135, or if the steering amount does not correspond to the moving amount through steering at Step S145, at Step S120, the first inspection unit 241 gives abnormality notification by using the notification device. Then, at Step S125, the first inspection unit 241 decreases the vehicle speed of the vehicle 100 to stop rotation of the wheel 101, and thereby stops the first preliminary control processing PP1 in the middle thereof.

If the maintained time is equal to or more than the reference time at Step S150, at Steps S155 and S160, the first inspection unit 241 executes the first inspection processing IP1. First, at Step S155, the first inspection unit 241 executes the acceleration inspection IP1a. Next, at Step S160, the first inspection unit 241 executes the steady control inspection IP1b. Then, the first inspection unit 241 decreases the vehicle speed of the vehicle 100 to the vehicle speed V0 to stop the vehicle 100, and thereby completes the first preliminary control processing PP1 and the first determination processing.

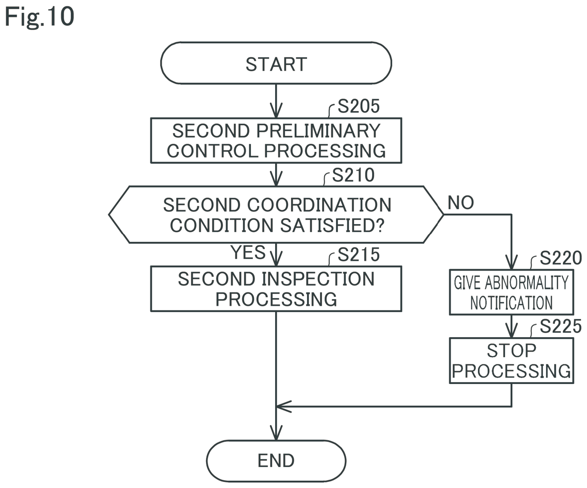

Fig. 10 is a flowchart illustrating a procedure of the second inspection control processing to implement the inspection method according to the present embodiment. The second inspection control processing includes the second preliminary control processing PP2, the second determination processing, and the second inspection processing. For example, the second inspection control processing is executed by the processor 201 of the server 200 at a timing at which each wheel 101 of the vehicle 100 subject to inspection is positioned on the corresponding roller 510. In the present embodiment, the second inspection control processing is executed immediately after the first inspection control processing while each wheel 101 is kept supported by the roller 510. In another embodiment, the second inspection control processing may be executed prior to the first inspection control processing.

At Step S205, the second inspection unit 242 executes the second preliminary control processing PP2. At Step S210, the determination unit 230 executes the second determination processing. More specifically, at Step S210, the determination unit 230 determines whether the second preliminary state PS2 at Step S205 satisfies the second coordination condition.

If the second coordination condition is satisfied at Step S210, at Step S215, the second inspection unit 242 executes the second inspection processing. After completion of the second inspection processing, the second inspection unit 242 decreases the circumferential speed of the roller 510 to stop rotation of the roller 510, and thereby completes the second preliminary control processing PP2 and the second determination processing. If the second coordination condition is not satisfied at Step S210, at Step S220, the second inspection unit 242 gives abnormality notification by the notification device. At Step S225, the second inspection unit 242 decreases the circumferential speed of the roller 510 to stop rotation of the roller 510, and thereby stops the second preliminary control processing PP2 in the middle thereof.

According to the inspection system 50 of the present embodiment described above, the preliminary control processing that is executed before the start of the inspection processing is utilized to determine whether the state of the vehicle 100 and the inspection equipment 500 satisfies the coordination condition. Therefore, the inspection processing can have further improved inspection reliability. More specifically, for example, as compared with a mode in which coordination of the vehicle 100 and the inspection equipment 500 is confirmed not through the preliminary control processing but through manned work by a worker, possibility that a degree of coordination of the vehicle 100 and the inspection equipment 500 varies can be reduced. As a result, variation in an inspection condition in the inspection processing can be suppressed, and a decrease in inspection reliability can be suppressed.

In the present embodiment, the determination processing is executed before the start of the inspection processing, and the inspection processing is started when the preliminary state satisfies the coordination condition. Therefore, the inspection processing can be started upon confirmation of satisfaction of the coordination condition, and the inspection processing can have further improved inspection reliability. For example, in the present embodiment, in a case in which rotation of the roller 510 is highly unlikely to appropriately follow driving rotation of the wheel 101, it can be suppressed that the inspection processing of rotating the roller 510 in such a manner as to follow the driving rotation of the wheel 101 is started, and the inspection processing can have further improved inspection reliability.

In the present embodiment, when the preliminary state does not satisfy the coordination condition, the inspection processing is not started and abnormality notification is given. Therefore, it can be suppressed that the inspection processing is started under a situation under which inspection reliability is highly unlikely to be secured, and abnormality notification can be given in such a situation. As a result, for example, a user notified of abnormality can be caused to take measures to eliminate the abnormality.

In the present embodiment, the first preliminary control processing PP1 is executed as the preliminary control processing related to the first inspection processing IP1. The first coordination condition CC1 that is the coordination condition related to the first preliminary control processing PP1 includes at least one of the circumferential speed condition and the torque condition. Accordingly, in the first preliminary control processing PP1, it can be confirmed that the roller 510 appropriately rotates in such a manner as to follow driving rotation of the wheel 101. Therefore, the first inspection processing IP1 can have further improved inspection reliability. More specifically, for example, execution of the first inspection processing IP1 can be suppressed under a situation with a high possibility that rotation of the roller 510 does not appropriately follow driving rotation of the wheel 101 due to failure of the driving device, the wheel 101, or the roller 510. Therefore, the first inspection processing IP1 can have further improved inspection reliability. Moreover, in the present embodiment, after the vehicle speed is controlled to be a value greater than zero through the first preliminary control processing PP1, the first inspection processing IP1 is executed without the vehicle speed being decreased to zero. Therefore, there is improved possibility that the first inspection processing IP1 can appropriately be executed while the situation in which rotation of the roller 510 appropriately follows driving rotation of the wheel 101 is maintained.

In the present embodiment, the first preliminary control processing PP1 includes the acceleration processing AP. The circumferential speed condition includes the first circumferential speed condition. The torque condition includes the first torque condition. Accordingly, in the first preliminary control processing PP1, following capability of rotation of the roller 510 with respect to driving rotation of the wheel 101 can be confirmed from a perspective of whether the rotation of the roller 510 appropriately follows the rotation of the wheel 101 at monotonically increasing circumferential speed. As a result, the first inspection processing IP1 can have further improved inspection reliability. Particularly, in the present embodiment, the acceleration inspection IP1a can have further improved inspection reliability.

In the present embodiment, the increase rate of the circumferential speed of the wheel 101 in the acceleration processing AP is less than the increase rate of the circumferential speed of the wheel 101 in the first inspection processing IP1. More specifically, in the present embodiment, the acceleration a1 in the acceleration processing AP is less than the acceleration a2 in the first inspection processing IP1. Therefore, in the acceleration processing AP, a sudden increase in the circumferential speed of the wheel 101 can be suppressed. As a result, in the acceleration processing AP, possibility that rotation of the roller 510 appropriately follows driving rotation of the wheel 101 can be increased.

In the present embodiment, the vehicle speed V2 corresponding to the maximum circumferential speed of the wheel 101 in the preliminary control processing is less than the vehicle speed V3 corresponding to the maximum circumferential speed of the wheel 101 in the inspection processing. Accordingly, in the preliminary control processing, an unnecessary increase in the circumferential speed of the wheel 101 can be suppressed. As a result, in the preliminary control processing, possibility that rotation of the roller 510 appropriately follows driving rotation of the wheel 101 can be increased.

In the present embodiment, the first preliminary control processing PP1 includes the steady control processing KP. The circumferential speed condition includes the second circumferential speed condition. The torque condition includes the second torque condition. In this mode, in the first preliminary control processing PP1, following capability of rotation of the roller 510 with respect to driving rotation of the wheel 101 can be confirmed from a perspective of whether the rotation of the roller 510 appropriately follows the rotation of the wheel 101 rotating at the constant circumferential speed. As a result, the first inspection processing IP1 can have further improved inspection reliability. Particularly, in the present embodiment, the steady control inspection IP1b can have further improved inspection reliability.

In the present embodiment, in the steady control processing KP, whether the steering amount in steering of the vehicle 100 by the unmanned driving control corresponds to the horizontal moving amount of the vehicle 100 on the roller 510 is determined. Therefore, the preliminary control processing can be utilized to confirm whether the vehicle 100 on the roller 510 appropriately moves in accordance with the steering amount.

In the present embodiment, in the steady control processing KP, the external sensor 300 used for running of the vehicle 100 by the unmanned driving control is used to determine whether the steering amount corresponds to the left-right moving amount of the vehicle 100. Accordingly, in the preliminary control processing, the external sensor 300 used for running by the unmanned driving control can be utilized to confirm whether the vehicle 100 on the roller 510 appropriately moves in accordance with the steering amount.

In the present embodiment, the second preliminary control processing PP2 is executed as the preliminary control processing related to the second inspection processing. The second coordination condition that is the coordination condition related to the second preliminary control processing PP2 includes the braking condition. Accordingly, in the second preliminary control processing PP2, it can be confirmed that the wheel 101 appropriately rotates in such a manner as to follow driving rotation of the roller 510. As a result, the second inspection processing can have further improved inspection reliability. More specifically, for example, execution of the second inspection processing can be suppressed under a situation under which the wheel 101 may be braked unintendedly due to a foreign matter that has entered the braking device. Therefore, the second inspection processing can have further improved inspection reliability.

Note that in another embodiment correspondence between operation of the vehicle 100 and operation of the inspection equipment 500 may be determined not only in the determination processing but also in the inspection processing. For example, in the first inspection processing, whether the circumferential speed of the wheel 101 corresponds to the circumferential speed of the roller 510 may be determined, or whether the correspondence between the rotational torque of the wheel 101 and the rotational torque of the roller 510 satisfies correspondence determined in advance may be determined. Accordingly, the inspection processing can have further improved inspection reliability.

### B. Second Embodiment

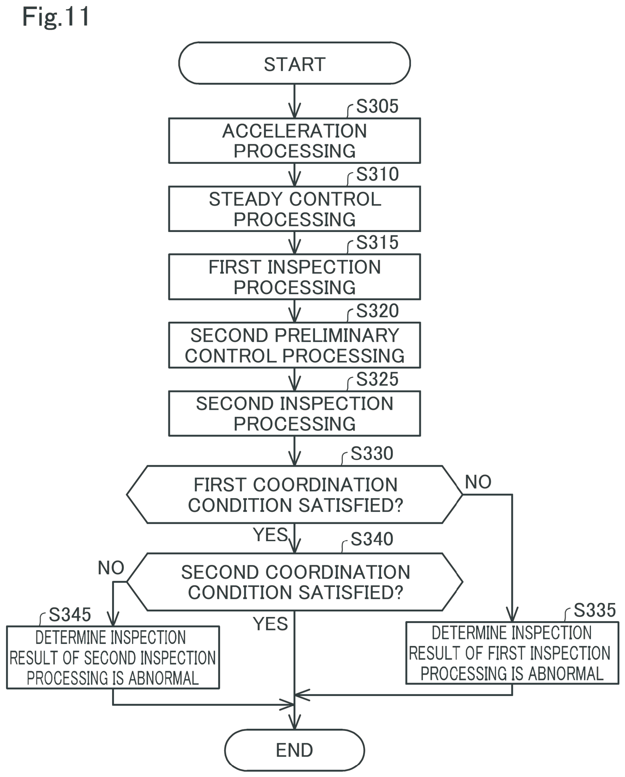

Fig. 11 is a flowchart illustrating a procedure of inspection control processing to implement an inspection method according to a second embodiment. The second embodiment is different from the first embodiment in that the inspection unit 240 determines that an inspection result of the inspection processing is abnormal when the preliminary state does not satisfy the coordination condition. Note that configurations of the inspection system 50 in the second embodiment which are similar to those of the first embodiment are not particularly described.

At Step S305 in Fig. 11, the first inspection unit 241 executes the acceleration processing AP. At Step S310, the first inspection unit 241 executes the steady control processing KP. Note that, in the steady control processing KP in the present embodiment, the left-right moving processing LR is not executed unlikely to the first embodiment, but the left-right moving processing LR may be executed. In the present embodiment, the left-right determination processing is not executed, but the left-right determination processing may be executed.

At Step S315, the first inspection unit 241 executes the first inspection processing IP1. That is, in the present embodiment, the first inspection processing IP1 is executed regardless of whether the first preliminary state PS1 in the first preliminary control processing PP1 satisfies the first coordination condition CC1.

At Step S320, the second inspection unit 242 executes the second preliminary control processing PP2. At Step S325, the second inspection unit 242 executes the second inspection processing. That is, in the present embodiment, the second inspection processing is executed regardless of whether the second preliminary state PS2 in the second preliminary control processing PP2 satisfies the second coordination condition.

At Step S330, the determination unit 230 executes the first determination processing and determines whether the first preliminary state PS1 at Steps S305 and S310 satisfies the first coordination condition CC1.

If the first coordination condition CC1 is not satisfied at Step S330, at Step S335, the first inspection unit 241 determines that an inspection result of the first inspection processing IP1 at Step S315 is abnormal. Note that the first inspection unit 241 may use, for example, the notification device to give notification of information indicating that the inspection result of the first inspection processing IP1 is abnormal.

If the first coordination condition CC1 is satisfied at Step S330, at Step S340, the determination unit 230 executes the second determination processing and determines whether the second preliminary state PS2 at Step S320 satisfies the second coordination condition. If the second coordination condition is not satisfied at Step S340, at Step S345, the second inspection unit 242 determines that an inspection result of the second inspection processing at Step S325 is abnormal. Note that the second inspection unit 242 may use, for example, the notification device to give notification of information indicating that the inspection result of the second inspection processing is abnormal.

Note that, in another embodiment, for example, the first determination processing may be executed prior to the second preliminary control processing PP2. The second determination processing may be executed prior to the first determination processing, or may be executed at the same time as the first determination processing. In this case, the second determination processing may be executed prior to the first preliminary control processing PP1.

According to the inspection system 50 of the second embodiment described above, when the preliminary state does not satisfy the coordination condition, the inspection result of the inspection processing is determined to be abnormal. According to this mode, the inspection processing is executed regardless of whether the coordination condition is satisfied, and when the coordination condition is not satisfied, the inspection result of the inspection processing can be determined to be abnormal. As a result, the inspection processing can have improved inspection reliability. More specifically, in the present embodiment, the inspection result of the first inspection processing executed under a situation under which rotation of the roller 510 is highly unlikely to appropriately follow driving rotation of the wheel 101 can be determined to be abnormal. The inspection result of the second inspection processing executed under a situation under which rotation of the wheel 101 is highly unlikely to appropriately follow driving rotation of the roller 510 can be determined to be abnormal. In this manner, the inspection result that is highly likely to be inappropriate can be determined to be abnormal afterwards, and the inspection processing can have further improved inspection reliability.

### C. Third Embodiment

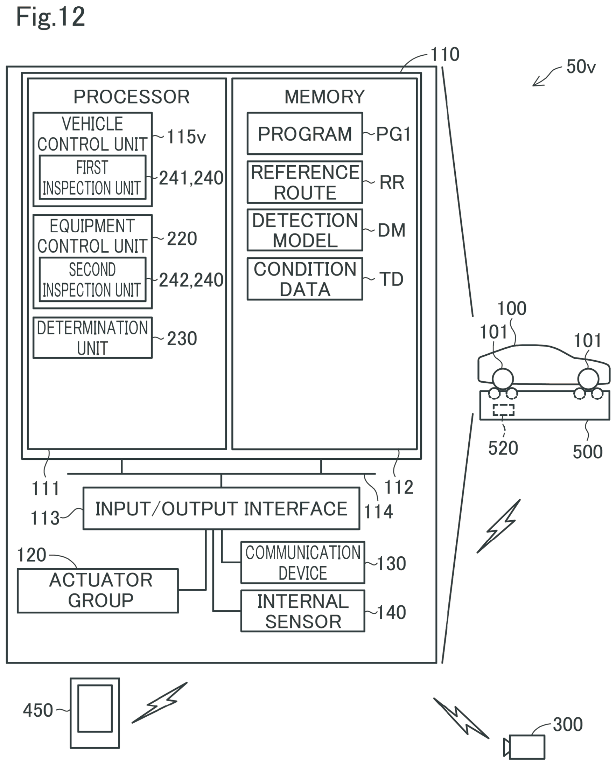

Fig. 12 is an explanatory diagram illustrating a schematic configuration of an inspection system 50v according to a third embodiment. In the present embodiment, the inspection system 50v is different from that of the first embodiment in that the inspection system 50v does not include the server 200. A device configuration of a vehicle in the present embodiment is similar to that of the first embodiment, and thereby the vehicle in the present embodiment is referred to as the vehicle 100 for convenience. The vehicle 100 in the present embodiment can run by autonomous control of the vehicle 100. Other configurations are the same as those of the first embodiment unless otherwise described.

In the present embodiment, the communication device 130 of the vehicle 100 can communicate with the external sensor 300, the terminal device 450, and the inspection equipment 500. The processor 111 of the vehicle control device 110 executes the program PG1 stored in the memory 112, thus functioning as a vehicle control unit 115v, the equipment control unit 220, and the determination unit 230. The vehicle control unit 115v generates a running control signal and outputs the generated running control signal to cause the actuator group 120 to operate, and thereby can cause the vehicle 100 to run by autonomous control. The vehicle control unit 115v functions as the first inspection unit 241 similarly to the remote control unit 210 in the first embodiment. In the present embodiment, the memory 112 stores, in addition to the program PG1, the detection model DM, the reference route RR, and the condition data TD in advance.

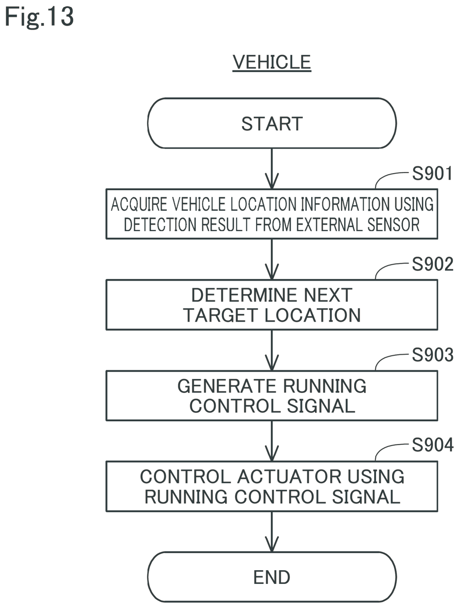

Fig. 13 is a flowchart illustrating a procedure of running control of the vehicle 100 according to the third embodiment. In the procedure in Fig. 13, the processor 111 of the vehicle 100 executes the program PG1, thus functioning as the vehicle control unit 115v.

In step S901, the processor 111 of the vehicle control device 110 acquires vehicle location information using detection result output from the camera as the external sensor 300. In step S902, the processor 111 determines a target location to which the vehicle 100 is to move next. In step S903, the processor 111 generates a running control signal for causing the vehicle 100 to run to the determined target location. In step S904, the processor 111 controls the actuator group 120 using the generated running control signal, thereby causing the vehicle 100 to run by following a parameter indicated by the running control signal. The processor 111 repeats the acquisition of vehicle location information, the determination of a target location, the generation of a running control signal, and the control over the actuator in a predetermined cycle. According to the system 50v in the present embodiment, it is possible to cause the vehicle 100 to run by autonomous control without controlling the vehicle 100 remotely using the server 200.

In the present embodiment, the vehicle control unit 115v executes the first inspection control processing similar to that in Fig. 9 and the second inspection control processing similar to that in Fig. 10. Note that in the present embodiment the "vehicle subject to inspection" means an own vehicle. For example, at Steps S105 and S155 in Fig. 9, acceleration of the vehicle 100 on the roller 510 is implemented by the autonomous control of the vehicle 100. At Steps S130 and S160, the vehicle speed of the vehicle 100 on the roller 510 is maintained by the autonomous control of the vehicle 100. At Step S140, the left-right moving processing LR is implemented by the autonomous control of the vehicle 100.

Also according to the inspection system 50v of the third embodiment described above, the preliminary control processing can be utilized to further improve inspection reliability of the inspection processing.

Note that in the inspection system 50v of the third embodiment, for example, similarly to the second embodiment, the inspection control processing illustrated in Fig. 11 may be executed.

### D. Other Embodiments

(D1) In the first embodiment described above, abnormality notification is given when the preliminary state does not satisfy the coordination condition, but the abnormality notification may not be given.

(D2) In each embodiment described above, the inspection equipment 500 is configured as the roller device, but the inspection equipment 500 is not limited thereto. The inspection equipment 500 may be configured as various types of inspection equipment capable of inspecting the vehicle 100. For example, the inspection equipment 500 may be configured as an alignment tester including a turntable that is rotatable in a horizontal direction while supporting the wheel 101. With such an alignment tester, steering of the vehicle 100 is executed while the wheel 101 is supported by the turntable, and thereby wheel alignment of the vehicle 100 is inspected. In this case, the preliminary control processing may be processing of executing steering of the vehicle 100 while the wheel 101 is supported by the turntable, and thereby the turntable is rotated horizontally in such a manner as to follow operation of the wheel 101 in response to the steering, that is, horizontal rotation of the wheel 101 by the steering. In this case, the coordination condition may be a condition related to correspondence between a rotation amount of the wheel 101 in the horizontal rotation by the steering and a rotation amount of the turntable following the horizontal rotation of the wheel 101. Accordingly, the preliminary control processing can be utilized to further improve reliability of the wheel alignment inspection.

(D3) In each embodiment described above, the first inspection processing IP1 and the second inspection processing are executed as the inspection processing, but the inspection processing is not limited thereto. For example, only the first inspection processing IP1 may be executed as the inspection processing, or only the second inspection processing may be executed as the inspection processing. For example, the inspection processing using the inspection equipment 500 different from the roller device may be executed.

(D4) In each embodiment described above, the first preliminary control processing PP1 and the second preliminary control processing PP2 are executed as the preliminary control processing, but the preliminary control processing is not limited thereto. For example, only the first preliminary control processing PP1 may be executed as the preliminary control processing, or only the second preliminary control processing PP2 may be executed as the preliminary control processing. For example, the preliminary control processing using the inspection equipment 500 different from the roller device may be executed.

(D5) In each embodiment described above, the first determination processing and the second determination processing are executed as the determination processing, but the determination processing is not limited thereto. For example, only the first determination processing may be executed as the determination processing, or only the second determination processing may be executed as the determination processing. For example, the determination processing related to the preliminary control processing using the inspection equipment 500 different from the roller device may be executed.

(D6) In each embodiment described above, the first preliminary control processing PP1 includes the acceleration processing AP and the steady control processing KP, but the first preliminary control processing PP1 is not limited thereto. For example, the first preliminary control processing PP1 may include only the acceleration processing AP, or may include only the steady control processing KP.

(D7) In each embodiment described above, the acceleration a1 in the acceleration processing AP is equal to or less than the acceleration a2 in the first inspection processing IP1. However, the acceleration in the acceleration processing AP may be greater than the acceleration in the first inspection processing IP1.

(D8) In each embodiment described above, the vehicle speed V2 that is the maximum vehicle speed in the first preliminary control processing PP1 is equal to or less than the vehicle speed V3 that is the maximum vehicle speed in the first inspection processing IP1. However, the maximum vehicle speed in the first preliminary control processing PP1 may be greater than the maximum vehicle speed in the first inspection processing IP1.

(D9) In the first embodiment, the left-right moving processing LR may not be executed. In the first embodiment, the left-right determination processing may not be executed.

(D10) In the first embodiment, the external sensor 300 is used in the left-right determination processing, but the present disclosure is not limited thereto. For example, in the left-right determination processing, instead of or in addition to the external sensor 300, the internal sensor 140, such as a GNSS sensor, an acceleration sensor, or a vehicle speed sensor, may be used.

(D11) In the inspection system 50 in each embodiment described above, various functional units including the determination unit 230, the first inspection unit 241, and the second inspection unit 242 may be provided to the vehicle 100. In this case, as described in the third embodiment, all of the determination unit 230, the first inspection unit 241, and the second inspection unit 242 may be provided to the vehicle 100, or some of these functional units may be provided to the vehicle 100. Further, in the inspection system 50, some or all of these functional units may be provided to, for example, a device outside of the server 200 and the vehicle 100.

(D12) In each of the above-described embodiments, the external sensor is not limited to the camera but may be the distance measuring device, for example. The distance measuring device is a light detection and ranging (LiDAR) device, for example. In this case, detection result output from the external sensor 300 may be three-dimensional point cloud data representing the vehicle 100. The server 200 and the vehicle 100 may acquire the vehicle location information through template matching using the three-dimensional point cloud data as the detection result and reference point cloud data, for example.

(D13) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.
(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(D14) In the above-described third embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(D15) In the above-described third embodiment, the vehicle 100 acquires vehicle location information using detection result from the external sensor. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator group 120 using the generated running control signal. In this case, the vehicle 100 is capable of running without using any detection result from an external sensor. The vehicle 100 may acquire target arrival time or traffic congestion information from outside the vehicle 100 and reflect the target arrival time or traffic congestion information in at least one of the route and the running control signal. The functional configuration of the system 50v may be entirely provided at the vehicle 100. Specifically, the processes realized by the system 50v in the present disclosure may be realized by the vehicle 100 alone.

(D16) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(D17) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle control device 110 and the actuator group 120 in order to fulfill three functions including "run," "turn," and "stop" by unmanned driving. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver' s seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(D18) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(D19) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

The present disclosure is not limited to the embodiments described above, but can be implemented in a variety of configurations without departing from the spirit of the present disclosure. For example, in order to solve some or all of the aforementioned problems or to achieve some or all of the aforementioned effects, the technical features of the embodiment corresponding to the technical features in each aspect described in the summary can appropriately be substituted or combined. Unless the technical feature is explained herein as being essential, it can be eliminated as appropriate.

## Claims

1. An inspection system (50;50v) comprising:
an inspection unit (240) configured to execute predetermined preliminary control processing using a moving object and inspection equipment (500) before a start of inspection processing in which the moving object is inspected by using the inspection equipment (500); and
a determination unit (230) configured to execute determination processing of determining whether a state of the moving object and the inspection equipment (500) in the preliminary control processing satisfies a predetermined coordination condition.

2. The inspection system (50;50v) according to claim 1, wherein the inspection unit (240) is configured to start the inspection processing when the state satisfies the coordination condition.

3. The inspection system (50;50v) according to claim 2, wherein the inspection unit (240) is configured not to start the inspection processing but give abnormality notification when the state does not satisfy the coordination condition.

4. The inspection system (50;50v) according to claim 1, wherein the inspection unit (240) is configured to determine that an inspection result of the inspection processing is abnormal when the state does not satisfy the coordination condition.

5. The inspection system (50;50v) according to any one of claims 1 to 4, wherein
the moving object is a vehicle (100) being capable of running by unmanned driving control,
the inspection equipment (500) is a roller device comprising a roller (510) rotatable while the roller (510) supports a wheel (101) of the vehicle (100),
before the inspection unit (240) starts first inspection processing (IP1) of drivingly rotating the wheel (101) on the roller (510) to rotate the roller (510) and thus inspecting the vehicle (100), the inspection unit (240) is configured to execute, as the preliminary control processing related to the first inspection processing (IP1), first preliminary control processing (PP1) of drivingly rotating the wheel (101) on the roller (510) by the unmanned driving control to rotate the roller (510),
the determination unit (230) is configured to execute, as the determination processing, first determination processing of determining whether the state in the first preliminary control processing (PP1) satisfies a first coordination condition (CC1) that is the coordination condition related to the first preliminary control processing (PP1), and
the first coordination condition (CC1) comprises at least one of a circumferential speed condition and a torque condition, the circumferential speed condition being related to a relation between circumferential speed of the wheel (101) and circumferential speed of the roller (510) in the first preliminary control processing (PP1), the torque condition being related to a relation between rotational torque of the wheel (101) and rotational torque of the roller (510) in the first preliminary control processing (PP1).

6. The inspection system (50;50v) according to claim 5, wherein
the first preliminary control processing (PP1) comprises acceleration processing (AP) of monotonically increasing the circumferential speed of the wheel (101) on the roller (510) by the unmanned driving control,
the circumferential speed condition comprises a condition related to a relation between the circumferential speed of the wheel (101) and the circumferential speed of the roller (510) in the acceleration processing (AP), and
the torque condition comprises a condition related to a relation between the rotational torque of the wheel (101) and the rotational torque of the roller (510) in the acceleration processing (AP).

7. The inspection system (50;50v) according to claim 6, wherein an increase rate of the circumferential speed of the wheel (101) in the acceleration processing (AP) is equal to or less than an increase rate of the circumferential speed of the wheel (101) in the first inspection processing (IP1).

8. The inspection system (50;50v) according to claim 5, wherein maximum circumferential speed of the wheel (101) in the first preliminary control processing (PP1) is equal to or less than maximum circumferential speed of the wheel (101) in the first inspection processing (IP1).

9. The inspection system (50;50v) according to claim 5, wherein
the first preliminary control processing (PP1) comprises steady control processing (KP) of rotating the wheel (101) on the roller (510) at constant circumferential speed by the unmanned driving control,
the circumferential speed condition comprises a condition related to a relation between the circumferential speed of the wheel (101) and the circumferential speed of the roller (510) in the steady control processing (KP), and
the torque condition comprises a condition related to a relation between the rotational torque of the wheel (101) and the rotational torque of the roller (510) in the steady control processing (KP).

10. The inspection system (50;50v) according to claim 9, wherein
the inspection unit (240) is configured to execute steering of the vehicle (100) by the unmanned driving control in the steady control processing (KP), and
the determination unit (230) is configured to determine whether a steering amount in the steering corresponds to a moving amount of the vehicle (100) on the roller (510) by the steering.

11. The inspection system (50;50v) according to claim 10, wherein the determination unit (230) is configured to use an external sensor (300) to determine whether the steering amount corresponds to the moving amount, the external sensor (300) being disposed outside of the vehicle (100) and used for running by the unmanned driving control.

12. The inspection system (50;50v) according to claim 1, wherein
the inspection equipment (500) is a roller device comprising a roller (510) rotatable while the roller (510) supports a wheel (101) of a vehicle (100) as the moving object,
before the inspection unit (240) starts second inspection processing that is the inspection processing to drivingly rotate the roller (510) to rotate the wheel (101) on the roller (510) and thus inspect the vehicle (100), the inspection unit (240) is configured to execute, as the preliminary control processing related to the second inspection processing, second preliminary control processing (PP2) of drivingly rotating the roller (510) to rotate the wheel (101) on the roller (510),
the determination unit (230) is configured to execute, as the determination processing, second determination processing of determining whether the state in the second preliminary control processing (PP2) satisfies a second coordination condition that is the coordination condition related to the second preliminary control processing (PP2), and
the second coordination condition is a condition related to a relation between braking force caused at the wheel (101) in the second preliminary control processing (PP2) and rotational torque of the roller (510) in the second preliminary control processing (PP2).

13. An inspection method comprising the steps of:
executing predetermined preliminary control processing using a moving object and inspection equipment (500) before a start of inspection processing in which the moving object is inspected by using the inspection equipment (500); and
determining whether a state of the moving object and the inspection equipment (500) in the preliminary control processing satisfies a predetermined coordination condition.
